# EUROPEAN PATENT APPLICATION

(11) **EP 3 171 157 A1**
(43) Date of publication of application: **24.05.2017**
(21) Application number: 16180257.4
(22) Date of filing: 20.07.2016
(51) Int. Cl.: G01N 21/25

(54) **DETECTION SYSTEM WITH QUANTUM LIGHT SOURCES**

(30) Priority: 20.11.2015 US 201562257870 P
(71) Applicant: Kingpak Technology Inc., Hsin-Chu Hsien 30267 (TW)
(72) Inventor: Chan, Chia-Hao, 30267 Hsin-Chu Hsien (TW); Chen, Han-Hsing, 30267 Hsin-Chu Hsien (TW)
(74) Representative: Viering, Jentschura & Partner mbB Patent- und Rechtsanwälte

(57) **Abstract**

The present invention discloses a detection system with quantum light source, it includes a quantum light source module and a detection module, wherein the quantum light source module is composed of plural quantum light sources and illuminating an object under test to generate an object image, while the detection module detects the object image and performs detection or analysis. With the implementation of the present invention, low implementation cost is made possible by dispensing with a complex production process and complicated manufacturing equipment; relatively small space taken up by the quantum light sources allows the detection system to be used in a variety of applications; accurate and high-intensity light output facilitates identification of the characteristics of a to-be-tested object, lowers the error rate of detection, and enhances detection efficiency substantially; and can be used to detect, identify, or discriminate physiological signals correctly.

## Description

### Field of the Invention

The present invention relates to a detection system and more particularly to a detection system with quantum light sources for accurately outputting the required high-intensity light to facilitate identification of the characteristics of a to-be-tested object, lower the error rate of detection, and substantially increase detection efficiency.

### Background of the Invention

High-performance light sources have rapidly become widely popular in modern life, especially those featuring very low power consumption and applicable to portable devices whose interior space is at a premium.

Nowadays, the mainstream light sources are LED (light-emitting diode)-based, and yet the large etendue of LEDs has made it difficult to increase the efficiency of a detection system with an LED light source in identifying the characteristics of a to-be-tested object. Moreover, an LED light source driven by a large current produces a thermal effect, which further compromises light emission efficiency and light intensity.

The foregoing limitations have significant effects on mobile device-related applications, particularly those associated with the detection of physiological signals, e.g., blood oxygen level, heart rate, or blood pressure.

In view of the above, it has been an important issue in the detection industry, or even the entire mobile application industry, to develop a simple, effective technique or detection system which can overcome the drawbacks of LED light sources, and whose innovative structural design can make effective use of photons and provide the desired etendue to satisfy the demands of the huge market of electronic devices equipped with a detection or identification system and thereby enhance the life quality of humanity.

### Summary of the Invention

The present invention relates to a detection system with quantum light sources. The detection system includes a detection module and a quantum light source module with a plurality of quantum light sources. The detection system can be implemented at low cost because it does not require a complicated production process or expensive manufacturing equipment. Furthermore, the quantum light sources occupy a relatively small space, which helps widen the range of applications of the detection system considerably. Last but not least, the quantum light sources can accurately output the required high-intensity light to facilitate identification of the characteristics of a to-be-tested object, to lower the error rate of detection, and to substantially enhance detection efficiency.

The present invention provides a detection system with quantum light sources. The detection system includes a quantum light source module and a detection module. The quantum light source module includes a plurality of quantum light sources and is configured to provide necessary light to a to-be-tested object in order to generate a to-be-tested image of the to-be-tested object. The detection module is configured to read the to-be-tested image and perform detection or analysis on the to-be-tested image.

The present invention also provides a quantum light source module which includes a plurality of quantum light sources and a receiving space for receiving a to-be-tested object. The receiving space is provided opposite the quantum light sources so that the to-be-tested object can be illuminated by the quantum light sources to generate a to-be-tested image.

Implementation of the present invention at least has the following advantageous effects:
1. A low implementation cost is made possible by dispensing with a complex production process and complicated manufacturing equipment;
2. The relatively small space taken up by the quantum light sources allows the detection system to be used in a variety of applications;
3. The accurate and high-intensity light output facilitates identification of the characteristics of a to-be-tested object, lowers the error rate of detection, and enhances detection efficiency substantially.
4. Due to its high resolution, the detection system can be used to detect, identify, or discriminate physiological signals correctly.

### Brief Description of the Drawings

The invention as well as a preferred mode of use, further objectives and advantages thereof will be best understood by reference to the following detailed description of illustrative embodiments when read in conjunction with the accompanying drawings, wherein:
FIG. 1 schematically shows the configuration of the detection system with quantum light sources according to an embodiment of the present invention;
FIG. 2 schematically shows the detection system in FIG. 1 integrated with an LED light source;
FIG. 3 schematically shows the quantum light source module according to another embodiment of the present invention;
FIG. 4 schematically shows the quantum light source module in FIG. 3 integrated with an LED light source;
FIG. 5 schematically shows the configuration of the detection system with quantum light sources according to still another embodiment of the present invention;
FIG. 6 schematically shows the detection system in FIG. 5 connected with a photoelectric conversion module; and
FIG. 7 schematically shows the detection system in FIG. 5 connected with a photoelectric conversion module and a data transmission module.

### Detailed Description of the Invention

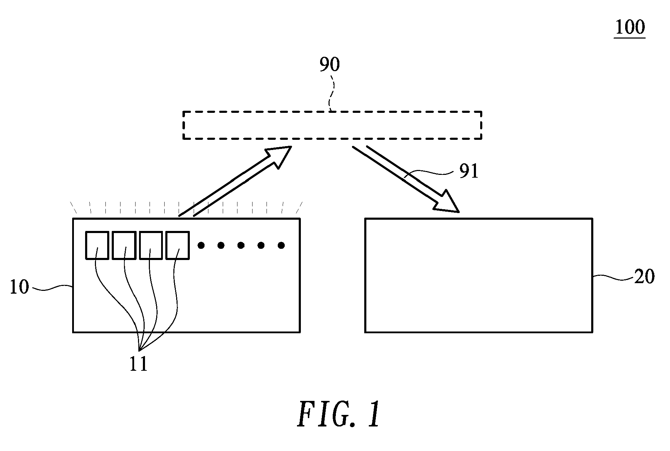

Referring to FIG. 1, the detection system 100 with quantum light sources according to an embodiment of the present invention includes a quantum light source module 10 and a detection module 20.

As shown in FIG. 1, the quantum light source module 10 of the detection system 100 includes a plurality of quantum light sources 11. The quantum light source module 10 is configured to provide necessary light to a to-be-tested object 90 in order to generate a to-be-tested image 91 of the to-be-tested object 90.

The to-be-tested object 90 may be a biological test piece, a biological specimen, or a biological sample.

The quantum light sources 11 of the quantum light source module 10 in FIG. 1 may be quantum dots, quantum wells, or quantum lines.

The features of quantum dots, quantum wells, and quantum lines are briefly stated as follows. A quantum dot is a quasi-zero-dimensional nanomaterial composed of only a small number of atoms. A quantum dot has the appearance of an infinitesimal dot because, roughly speaking, each of its three dimensions is less than 100 nm. Moreover, the electrons in a quantum dot are restricted in movement in all directions, which leads to a significant quantum confinement effect. As the quantum confinement effect results in a structure of discrete energy levels similar to that of an atom, quantum dots are also referred to as artificial atoms. In a block of material of an ordinary size, the wavelengths of electrons are far shorter than the physical dimensions of the block, so the quantum confinement effect is not significant.

A quantum well is a system one of whose three dimensions is reduced to a single wavelength of an electron and in which, therefore, an electron is allowed to move freely only in a two-dimensional space defined by the other two dimensions.

A quantum line is a further reduced version of a quantum well, with two of its three dimensions reduced to a single wavelength of an electron. An electron in a quantum line, therefore, can move only in one dimension.

A quantum dot is obtained when all the three dimensions are reduced to a single wavelength of an electron.

In this embodiment of the present invention, the light emitted by each quantum light source 11 may have a wavelength ranging from 1 Å to 1 mm. Generally, the wavelength of light emitted by the quantum light sources 11 ranges from 450 nm, of blue light, to 750 nm, of red light. Furthermore, the waveform of light emitted by the quantum light sources 11 has a full width at half maximum (FWHM) ranging from 1 nm to 50 nm. FWHM is defined as the full width of a portion of a light waveform that corresponds to light intensities not lower than half of the maximum light intensity.

The quantum dots, quantum wells, or quantum lines may be made of a group II-VI compound such as cadmium sulfide (CdS) or cadmium selenide (CdSe).

With continued reference to FIG. 1, the detection module 20 of the detection system 100 is configured to receive or read the to-be-tested image 91 generated by illuminating the to-be-tested object 90 with the light emitted by the quantum light source module 10, and to perform detection or analysis on the to-be-tested image 91. When the to-be-tested object 90 is placed above or near, and is illuminated by, the quantum light source module 10, the light of the quantum light source module 10 gives a different look to the to-be-tested object 90. In the meantime, the detection module 20 performs an image-capturing operation to obtain optical image signals, i.e., the to-be-tested image 91.

When used in an application system, the detection module 20 can be, but is not limited to, an optical detection module or an image detection module. The detection module 20 may alternatively be a biological detection module 20 for performing detection on a biological test piece, a biological specimen, or a biological sample.

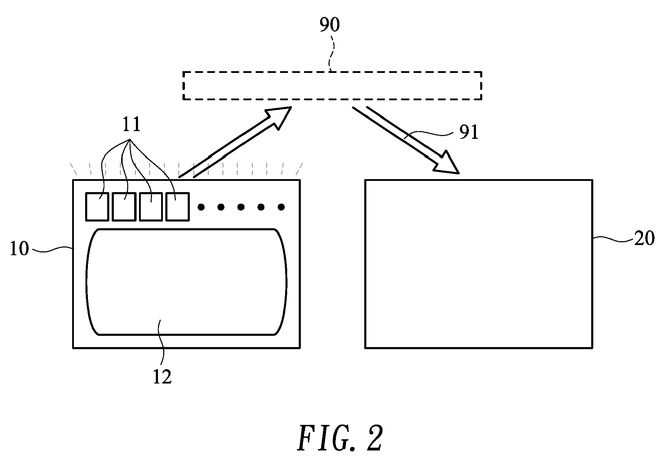

Referring to FIG. 2, the quantum light sources 11 of the quantum light source module 10 may be arranged together with an LED light source 12 in order to increase the accuracy and/or precision of light of the quantum light source module 10 in certain applications.

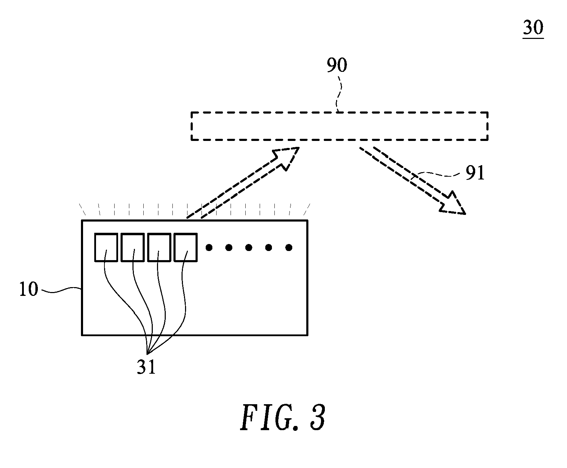

FIG. 3 shows the quantum light source module 30 according to another embodiment of the present invention. The quantum light source module 30 includes a plurality of quantum light sources 31 for illuminating a to-be-tested object 90 in a receiving space so that a to-be-tested image 91 of the to-be-tested object 90 can be generated. The receiving space is configured for receiving the to-be-tested object 90.

The technical features and connections of the quantum light source module 30 and the quantum light sources 31 are the same as those of the quantum light source module 10 and the quantum light sources 11 of the detection system 100 described above and therefore will not be stated repeatedly.

Likewise, the quantum light sources 31 may be quantum dots, quantum wells, or quantum lines. The light emitted by each quantum light source 31 may also have a wavelength ranging from 1 Å to 1 mm; or from 450 nm, of blue light, to 750 nm, of red light.

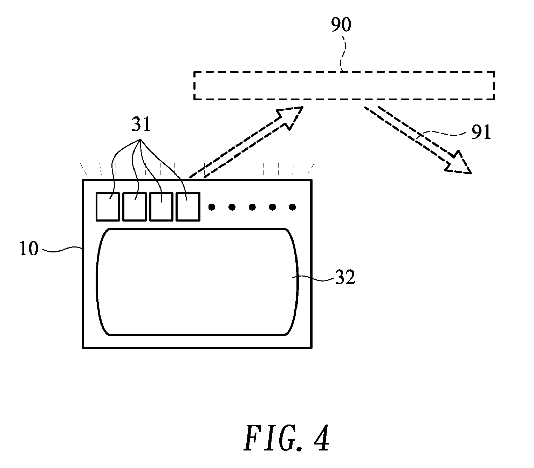

As shown in FIG. 4, the quantum light sources 31 of the quantum light source module 30 may also be arranged together with an LED light source 32 to increase the accuracy and/or precision of light of the quantum light source module 30.

It should be pointed out that, with or without the LED light source 32, the quantum light source module 30 can provide the light needed for performing biological detection on a biological test piece, a biological specimen, or a biological sample.

In a nutshell, thanks to the plural quantum light sources 11 of the quantum light source module 10, the detection system 100 does not require a complicated production process or expensive manufacturing equipment and therefore has a low implementation cost; the relatively small space taken up by the light sources allows the detection system 100 to have a wide range of applications; and the quantum light source module 10 can accurately output the required high-intensity light to facilitate identification of the characteristics of a to-be-tested object, to lower the error rate of detection, to greatly increase detection efficiency, and to provide high resolution.

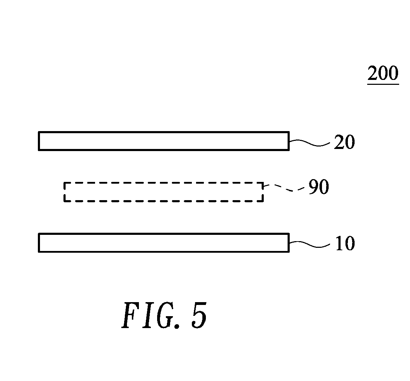

FIG. 5 shows the detection system 200 with quantum light sources according to yet another embodiment of the present invention, in which the quantum light source module 10 and the detection module 20 are provided opposite each other, with the to-be-tested object 90 fixedly provided therebetween. The to-be-tested object 90 is illuminated by the quantum light source module 10 to generate the to-be-tested image 91. The detection module 20 receives or reads the to-be-tested image 91 and performs detection on the to-be-tested image 91.

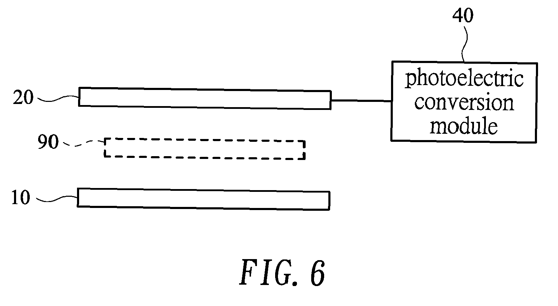

Referring to FIG. 6, the detection module 20 of the detection system 200 may be further connected with a photoelectric conversion module 40. The photoelectric conversion module 40 is configured to convert the optical image signals of the to-be-tested image 91 received or read by the detection module 20 into electrical data signals so that a variety of identification processes or analyses can be subsequently conducted by software computation.

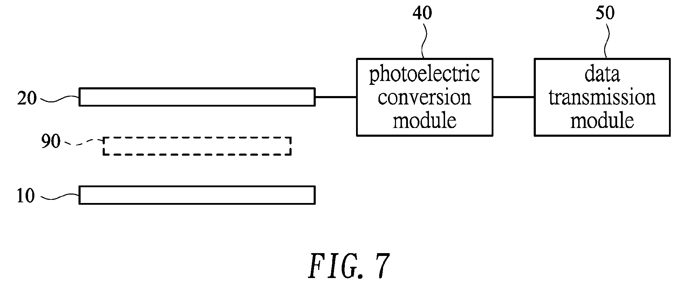

Referring to FIG. 7, the detection module 20 of the detection system 200 is sequentially connected with the photoelectric conversion module 40 and a data transmission module 50. The data transmission module 50 serves mainly to process the aforesaid electrical data signals and connect with a wired or wireless network so as to transmit related signals to and from a remote terminal.

The embodiments described above are intended only to demonstrate the technical concept and features of the present invention so as to enable a person skilled in the art to understand and implement the contents disclosed herein. It is understood that the disclosed embodiments are not to limit the scope of the present invention. Therefore, all equivalent changes or modifications based on the concept of the present invention should be encompassed by the appended claims.

## Claims

1. A detection system (100, 200) with quantum light sources, comprising:
a quantum light source module (10) including a plurality of quantum light sources (11), the quantum light source module (10) being configured to provide necessary light to a to-be-tested object (90) and generates a to-be-tested image (91); and
a detection module (20) for receiving and detecting the to-be-tested image (91).

2. The detection system (100, 200) of claim 1, wherein the quantum light sources (11) are quantum dots, quantum wells, or quantum lines.

3. The detection system (100, 200) of claim 1, wherein the detection module (20) is an optical detection module or an image detection module.

4. The detection system (100, 200) of claim 1, wherein the quantum light sources (11) are arranged together with a light-emitting diode (LED) light source (12).

5. The detection system (100, 200) of claim 1, wherein the detection module (20) is a biological detection module for performing detection on a biological test piece, a biological specimen, or a biological sample.

6. The detection system (100, 200) of claim 1, wherein the detection module (20) is further connected with a photoelectric conversion module (40) or with the photoelectric conversion module (40) and a data transmission module (50).

7. A quantum light source module (30), comprising a plurality of quantum light sources (31) for illuminating a to-be-tested object (90) and generating a to-be-tested image (91), wherein the to-be-tested object (90) is in a receiving space for receiving the to-be-tested object (90).

8. The quantum light source module (30) of claim 7, wherein at least one of the quantum light sources (31) is arranged together with a light-emitting diode (LED) light source (32).

9. The quantum light source module (30) of claim 7, wherein the quantum light source module (30) provides light necessary for performing biological detection on a biological test piece, a biological specimen, or a biological sample.

10. The quantum light source module (30) of claim 7, wherein the quantum light sources (31) are quantum dots, quantum wells, or quantum lines; and each of the quantum light sources (31) emits light of a wavelength ranging from 1Å to 1 mm and a waveform with a full width at half maximum (FWHM) ranging from 1 nm to 50 nm.
